# EUROPEAN PATENT APPLICATION

(11) **EP 4 645 530 A1**
(43) Date of publication of application: **05.11.2025**
(21) Application number: 23912169.2
(22) Date of filing: 26.12.2023
(51) Int. Cl.: H01M 10/658, H01M 10/625, H01M 50/293

(54) **HEAT TRANSFER SUPPRESSION SHEET AND BATTERY PACK**

(30) Priority: 28.12.2022 JP 2022212229
(71) Applicant: IBIDEN CO., LTD., Ogaki-shi, Gifu 503-8604 (JP)
(72) Inventor: KUMANO, Keiji, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/046719
(87) International publication number: WO 2024/143391

(57) **Abstract**

To provide a heat transfer suppression sheet capable of suppressing excessive swelling outward of an end surface parallel to a thickness direction of an elastic sheet even in a case where the elastic sheet is pressed in the thickness direction, and capable of suppressing a decrease in heat insulation property due to a reduction in thickness. A heat transfer suppression sheet (10) includes an elastic sheet (11) having a pair of main surfaces (11a) orthogonal to a thickness direction and an end surface (11b) substantially parallel to the thickness direction, and a swelling suppression sheet (12) continuously disposed along at least the end surface (11b). The swelling suppression sheet (12) preferably has a tensile strength of 20 MPa or more and 150 MPa or less.

## Description

### TECHNICAL FIELD

The present invention relates to a heat transfer suppression sheet and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

As the battery cell, a lithium ion secondary battery, which has higher capacity and is capable of higher output than a lead-acid battery, a nickel metal hydride battery, or the like, is mainly used, and the battery cell may expand during charging and discharging or due to repeated use. Therefore, a partition member capable of absorbing the expansion of the battery cell is preferably disposed between the battery cell and the battery cell.

For example, Patent Literature 1 discloses a separator including a heat insulation sheet and an elastic layer stacked on a surface of the heat insulation sheet, in which the elastic layer partially adheres to a surface of a case of a battery cell and includes an elastic protruding portion that is deformed by the expansion of the battery cell. In addition, a deformation space for the elastic protruding portion to move in an outer peripheral direction orthogonal to a pressing direction when pressed by the battery cell is formed between the battery cell and the separator.

According to the above Patent Literature 1, when the separator is pressed by the expanding battery cell, the elastic protruding portion is pushed out into the deformation space and is thinner. At this time, since the elastic protruding portion moves to the deformation space and is thinner, the expansion of the battery cell can be absorbed without difficulty.

In addition, Patent Literature 2 proposes a heat insulation material for a battery disposed to cover a surface of a battery, the heat insulation material including a heat insulation portion disposed to face the surface of the battery and a buffer portion that is more likely to be compressed and deformed than the heat insulation portion. At least a part of the buffer portion is disposed at a position closer to the surface of the battery than the heat insulation portion. Note that, the above Patent Literature 2 describes an example in which the heat insulation portion forming a sea portion and the buffer portion forming an island portion are provided, and the buffer portion is formed to have a size smaller than that of the heat insulation portion.

Also in the above Patent Literature 2, a gap is formed between a surface of one cell and the surface of the heat insulation portion of the heat insulation material. Therefore, in the case where the one cell expands and the surface thereof presses the buffer portion, a part of the buffer portion protrudes into the gap, so that the buffer portion can be easily compressed and deformed.

### CITATION LIST

### PATENT LITERATURE

Patent Literature 1: WO 2020/262080
Patent Literature 2: JP2021-140968A

### SUMMARY OF INVENTION

### TECHNICAL PROBLEM

However, in the case where the elastic layer or the buffer portion is pressed in the thickness direction, when the elastic layer or the buffer portion is designed to be small in order to protrude into the deformation space or the gap, a repulsive force due to the elastic layer and the like applied to a main surface side of the battery cell greatly varies depending on the location. As described above, the battery cell may expand during charging and discharging or due to repeated use. Therefore, every time the battery cell repeatedly expands and shrinks, a region having a large repulsive force and a region having a small repulsive force are generated, and as a result, there is a concern that the lifetime of the battery is shortened.

In addition, Patent Literature 2 also describes an example in which the buffer portion is disposed in a size equivalent to the size of the main surface of the battery cell, but the buffer portion swells from an end surface of the heat insulation material as the buffer portion is easily compressed and deformed. As a result, a deviation or wobbling may occur between the battery cell and the heat insulation material, and a performance of the battery pack may decrease. In addition, when the buffer portion is largely compressed and deformed and the thickness thereof is reduced, the heat insulation property decreases.

The present invention has been made in view of the above problems, and an object of the present invention is to provide a heat transfer suppression sheet including an elastic sheet and a battery pack capable of suppressing excessive swelling outward of an end surface parallel to a thickness direction of the elastic sheet even in a case where the elastic sheet is pressed in the thickness direction, and capable of suppressing a decrease in heat insulation property due to a reduction in thickness.

### SOLUTION TO PROBLEM

The above object of the present invention is achieved by the following configuration [1] relating to a heat transfer suppression sheet.
[1] A heat transfer suppression sheet including:
   an elastic sheet having a pair of main surfaces orthogonal to a thickness direction and an end surface substantially parallel to the thickness direction; and
   a swelling suppression sheet continuously disposed along at least the end surface, in which
   the swelling suppression sheet has a tensile strength of 20 MPa or more.
   Preferred embodiments of the present invention relating to the heat transfer suppression sheet relate to the following [2] to [9].
[2] The heat transfer suppression sheet according to [1], in which the swelling suppression sheet has a tensile strength of 150 MPa or less.
[3] The heat transfer suppression sheet according to [1] or [2], in which the swelling suppression sheet contains at least one kind of resin selected from a polyethylene, a polypropylene, a polystyrene, a polyethylene terephthalate, and vinyl chloride.
[4] The heat transfer suppression sheet according to any one of [1] to [3], in which the swelling suppression sheet includes an outer main surface side portion that covers an outer main surface side orthogonal to the thickness direction of the heat transfer suppression sheet, and an outer end surface side portion that covers an outer end surface side substantially parallel to the thickness direction of the heat transfer suppression sheet, and includes at least the elastic sheet therein.
[5] The heat transfer suppression sheet according to [4], in which the swelling suppression sheet includes a linear thick portion extending along a direction substantially parallel to the main surface of the elastic sheet in at least a partial region of the outer end surface side portion.
[6] The heat transfer suppression sheet according to [5], in which at least a part of the thick portion is curved or meandered.
[7] The heat transfer suppression sheet according to any one of [1] to [6], further including: a heat insulation material stacked on at least one of the pair of main surfaces of the elastic sheet.
[8] The heat transfer suppression sheet according to [7], in which the heat insulation material has a thermal conductivity of less than 1 (W/m·K).
[9] The heat transfer suppression sheet according to [7] or [8], in which the heat insulation material contains at least one kind selected from an inorganic fiber, an organic fiber, an inorganic particle, and an organic particle.
   The above object of the present invention is also achieved by the following configuration [10] relating to a battery pack.
[10] A battery pack including: a plurality of battery cells; and the heat transfer suppression sheet according to any one of [1] to [9], in which the plurality of battery cells are connected in series or in parallel.

### ADVANTAGEOUS EFFECTS OF INVENTION

Since the heat transfer suppression sheet according to the present invention includes the elastic sheet, heat transfer can be suppressed. In addition, since the swelling suppression sheet is disposed along the end surface of the elastic sheet, it is possible to suppress excessive swelling outward of the end surface parallel to the thickness direction of the elastic sheet even in the case where the elastic sheet is pressed in the thickness direction, and it is possible to suppress a decrease in heat insulation property due to a reduction in thickness.

Since the battery pack according to the present invention includes the heat transfer suppression sheet described above, it is possible to suppress the transfer of heat generated at a certain location to another location, to cope with the expansion of the battery cell due to normal charging and discharging, and to suppress a decrease in performance of the battery.

### BRIEF DESCRIPTION OF DRAWINGS

[Fig. 1] Fig. 1 shows a heat transfer suppression sheet according to a first embodiment of the present invention, in which (a) is a cross-sectional view in a thickness direction, and (b) is a top view seen from a main surface side thereof.
[Fig. 2] Fig. 2 is a cross-sectional view schematically showing a battery pack to which the heat transfer suppression sheet according to the first embodiment is applied.
[Fig. 3] Fig. 3 shows a heat transfer suppression sheet according to a second embodiment of the present invention, in which (a) is a cross-sectional view in a thickness direction, and (b) is a top view seen from a main surface side thereof.
[Fig. 4] Fig. 4 is a cross-sectional view in a thickness direction showing a heat transfer suppression sheet according to a third embodiment of the present invention.
[Fig. 5] Fig. 5 is a perspective view showing a heat transfer suppression sheet according to a fourth embodiment of the present invention.

### DESCRIPTION OF EMBODIMENTS

The inventors of the present invention have conducted intensive studies to obtain a heat transfer suppression sheet capable of suppressing a repulsive force to a battery cell by deforming an elastic sheet by an appropriate amount in the case where the heat transfer suppression sheet is pressed due to expansion of the battery cell, and capable of suppressing a decrease in heat insulation property. As a result, the inventors of the present invention have found that the above problem can be solved by disposing a swelling suppression sheet along at least an end surface of the elastic sheet.

Hereinafter, embodiments of the present invention will be described in detail with reference to the drawings. Note that, the present invention is not limited to the embodiments described below, and can be freely changed and implemented without departing from the gist of the present invention.

### [1. Heat Transfer Suppression Sheet]

### <First Embodiment>

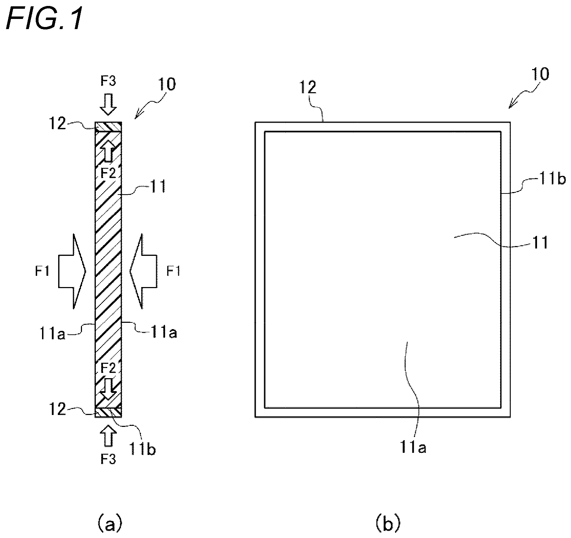

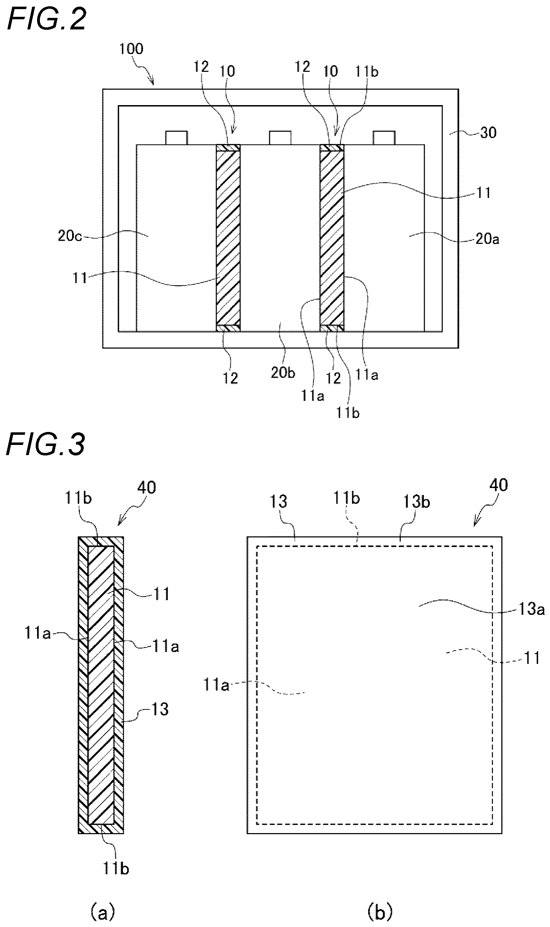

Fig. 1 shows a heat transfer suppression sheet according to a first embodiment of the present invention, in which (a) is a cross-sectional view in a thickness direction, and (b) is a top view seen from a main surface side thereof. In addition, Fig. 2 is a cross-sectional view schematically showing a battery pack to which the heat transfer suppression sheet according to the first embodiment is applied.

A heat transfer suppression sheet 10 according to the first embodiment includes an elastic sheet 11 and a swelling suppression sheet 12. The elastic sheet 11 has a pair of main surfaces 11a orthogonal to a thickness direction and end surfaces 11b substantially parallel to the thickness direction. In the present embodiment, the swelling suppression sheet 12 is continuously formed along the end surface 11b so as to cover the end surface 11b of the elastic sheet 11. Note that, as to be described later, the swelling suppression sheet 12 has specific physical properties, and has an effect of suppressing the end surface 11b of the elastic sheet 11 from swelling outward.

As shown in Fig. 2, the heat transfer suppression sheet 10 according to the present embodiment is used in, for example, a battery pack. A battery pack 100 includes a battery case 30 and a plurality of battery cells 20a, 20b, and 20c housed inside the battery case 30. In addition, the heat transfer suppression sheet 10 is interposed between the battery cell 20a and the battery cell 20b and between the battery cell 20b and the battery cell 20c. The plurality of battery cells 20a, 20b, and 20c are connected in series or in parallel by a bus bar (not shown) or the like.

Note that, the battery cells 20a, 20b, and 20c are, for example, preferably a lithium ion secondary battery, but is not particularly limited thereto, and may be applied to other secondary batteries.

In the battery pack 100 configured in this manner, in the case where a temperature of at least one of the battery cells 20a, 20b, and 20c rises, since the elastic sheet 11 is interposed between the adjacent battery cells, it is possible to suppress heat transfer between the battery cells. In the battery pack 100, when the battery cells 20a, 20b, and 20c expand due to charging and discharging or the like, as shown in (a) of Fig. 1, a pressing force F1 is applied toward the main surfaces 11a of the elastic sheet 11. Since the elastic sheet 11 is formed of an elastic body, the main surfaces 11a press the elastic sheet 11 to reduce a thickness thereof, and a part of the reduced volume tries to escape to a non-pressed region, generating a swelling force F2. In the first embodiment, since the swelling suppression sheet 12 covers the end surface 11b of the elastic sheet 11 and the swelling suppression sheet 12 presses the end surface 11b of the elastic sheet 11 inward with a pressing force F3, it is possible to suppress the end surface 11b of the elastic sheet 11 from swelling outward.

As a result, it is possible to suppress the occurrence of a deviation or wobbling between the battery cells 20a, 20b, and 20c and the heat transfer suppression sheet 10, and it is possible to prevent a decrease in performance of the battery pack. In addition, even in the case where the main surfaces 11a of the elastic sheet 11 are pressed with a large pressing force F1, it is possible to prevent the elastic sheet 11 from being greatly compressed and deformed and the thickness from being excessively reduced, and it is possible to maintain a heat insulation property between the battery cells 20a, 20b, and 20c.

Note that, the swelling of the end surface 11b can be suppressed by appropriately selecting a material of the elastic sheet 11 and controlling an elastic modulus. However, according to the present embodiment, the swelling can be suppressed simply by attaching the swelling suppression sheet 12 regardless of the material of the elastic sheet 11. Therefore, a margin of selection of the elastic sheet 11 increases, and the elastic sheet 11 having desired properties other than the elastic modulus can be freely selected.

The swelling suppression sheet 12 may or may not be in close contact with the end surface 11b of the elastic sheet 11. When the swelling suppression sheet 12 is in close contact with the end surface 11b, the swelling suppression sheet 12 can be suppressed from being detached from the elastic sheet 11.

### <Second Embodiment>

Fig. 3 shows a heat transfer suppression sheet according to a second embodiment of the present invention, in which (a) is a cross-sectional view in a thickness direction, and (b) is a top view seen from a main surface side thereof. In the second embodiment shown in Fig. 3, components that are the same as those in the first embodiment shown in Fig. 1 are denoted by the same reference numerals, and detailed description thereof will be omitted or simplified.

As shown in Fig. 3, in a heat transfer suppression sheet 40 according to the second embodiment, a swelling suppression sheet 13 covers the main surfaces 11a and the end surface 11b of the elastic sheet 11 and includes the elastic sheet 11 therein. That is, the swelling suppression sheet 13 includes an outer main surface side portion 13a covering a main surface 11a side of the elastic sheet 11 and an outer end surface side portion 13b covering the end surface 11b of the elastic sheet 11, and the outer main surface side portion 13a and the outer end surface side portion 13b are continuously formed with each other.

in the second embodiment configured in this manner, heat transfer between the battery cells can also be suppressed. In addition, the outer end surface side portion 13b of the swelling suppression sheet 13 is disposed on an end surface 11b side of the elastic sheet 11, and the outer end surface side portion 13b presses the end surface 11b of the elastic sheet 11 inward. Therefore, it is possible to suppress the end surface 11b of the elastic sheet 11 from swelling outward. As a result, in the case of applying the heat transfer suppression sheet 40 according to the second embodiment to the battery pack 100 shown in Fig. 2, it is possible to prevent a decrease in performance of the battery pack due to a deviation or wobbling between the battery cells 20a, 20b, and 20c and the heat transfer suppression sheet 40. In addition, it is possible to suppress a decrease in heat insulation property due to a reduction in thickness of the elastic sheet 11.

Note that, the main surface 11a of the elastic sheet 11 and the outer main surface side portion 13a of the swelling suppression sheet 13 may or may not be in contact with each other, and another functional member may be interposed between the main surface 11a of the elastic sheet 11 and the outer main surface side portion 13a of the swelling suppression sheet 13. Similarly, the end surface 11b of the elastic sheet 11 and the outer end surface side portion 13b of the swelling suppression sheet 13 may or may not be in direct contact with each other. Specifically, another functional sheet may be interposed between the end surface 11b of the elastic sheet 11 and the outer end surface side portion 13b of the swelling suppression sheet 13 as long as the effect of suppressing the swelling of the end surface of the elastic sheet 11 can be obtained by disposing the swelling suppression sheet 13.

### <Third Embodiment>

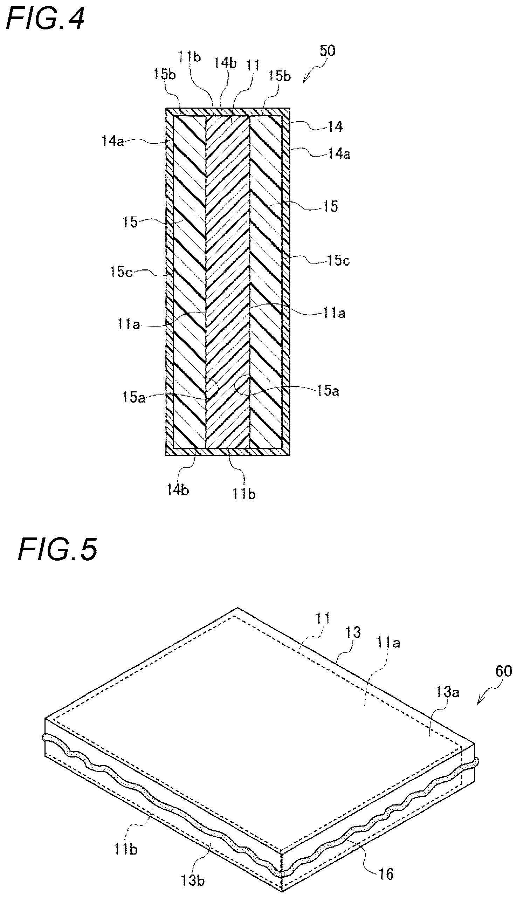

Fig. 4 is a cross-sectional view in a thickness direction showing a heat transfer suppression sheet according to a third embodiment of the present invention. In the third embodiment shown in Fig. 4, components that are the same as those in the first embodiment shown in Fig. 1 are denoted by the same reference numerals, and detailed description thereof will be omitted or simplified.

As shown in Fig. 4, in a heat transfer suppression sheet 50 according to the third embodiment, a heat insulation material 15 is stacked on each of the pair of main surfaces 11a of the elastic sheet 11. Specifically, one main surface 15c of a pair of main surfaces 15a and 15c orthogonal to a thickness direction of the heat insulation material 15 is disposed to be in contact with the main surface 11a of the elastic sheet 11. A swelling suppression sheet 14 includes the elastic sheet 11 and a pair of heat insulation materials 15 therein. Therefore, the swelling suppression sheet 14 includes an outer main surface side portion 14a covering one main surface 11c side of the heat insulation material 15, and the outer end surface side portion 13b covering the end surface 11b of the elastic sheet 11 and the end surface 15b of the heat insulation material 15.

In the third embodiment configured in this manner, the pair of heat insulation materials 15 are disposed on the main surface 11a sides of the elastic sheet 11. Therefore, in the case of applying the heat transfer suppression sheet 50 to the battery pack 100 shown in Fig. 2, the heat insulation property between the battery cells 20a, 20b, and 20c can be further improved. In addition, since the outer end surface side portion 14b of the swelling suppression sheet 14 is disposed on the end surface 11b side of the elastic sheet 11, it is possible to suppress the end surface 11b of the elastic sheet 11 from swelling outward. As a result, it is possible to prevent a decrease in performance of the battery pack 100.

Further, in the third embodiment, the swelling suppression sheet 14 includes the elastic sheet 11 and the pair of heat insulation materials 15 therein, and for example, in the case where the heat insulation material 15 contains an inorganic particle, an organic particle, or the like, the particle or the like can be prevented from falling off by the swelling suppression sheet 14.

Note that, in the present embodiment, the pair of heat insulation materials 15 are disposed on both the main surfaces 11a of the elastic sheet 11, but for example, the heat insulation material 15 may be disposed only on one main surface 11a of the elastic sheet 11.

### <Fourth Embodiment>

Fig. 5 is a perspective view showing a heat transfer suppression sheet according to a fourth embodiment of the present invention. In the fourth embodiment shown in Fig. 5, components that are the same as those in the second embodiment shown in Fig. 3 are denoted by the same reference numerals, and detailed description thereof will be omitted or simplified.

As shown in Fig. 5, a heat transfer suppression sheet 60 according to the fourth embodiment includes a linear thick portion 16 extending along a direction substantially parallel to the main surface 11a of the elastic sheet 11 on the outer end surface side portion 13b of the swelling suppression sheet 13.

In the fourth embodiment configured in this manner, since the thick portion 16 is provided on the outer end surface side portion 13b of the swelling suppression sheet 13, the effect of suppressing the swelling outward of the end surface 11b of the elastic sheet 11 can be further improved. Note that, at least a part of the thick portion 16 is preferably curved or meandered. When there is a meandering region in the thick portion 16, in the case where the end surface 11b of the elastic sheet 11 swells, the outer end surface side portion 13b slightly swells according to the swelling, and the meandering thick portion 16 elongates accordingly. Thereafter, when a pressure applied to the heat transfer suppression sheet 60 by the battery cells 20a, 20b, and 20c decreases and the elastic sheet 11 shrinks, the end surface 11b of the elastic sheet 11 retracts inward. At this time, the thick portion 16 tries to return to the meandering shape, and a force following the retreat of the end surface 11b is generated to the outer end surface side portion 13b of the swelling suppression sheet 13, so that a swelling suppressing effect by the swelling suppression sheet 13 can be maintained for a long period of time.

Note that, the thick portion 16 has the swelling suppression effect as long as it is formed to surround the outer end surface side portion 13b of the swelling suppression sheet 13. However, the thick portion 16 is not necessarily formed to surround the outer end surface side portion 13b, and the above effect can be obtained as long as the thick portion 16 is formed in at least a partial region of the outer end surface side portion 13b. Similarly, the thick portion 16 is not necessarily curved or meandered over the entire region thereof, and the above effect can be obtained as long as at least a part of the thick portion is curved or meandered.

Next, materials constituting the heat transfer suppression sheets according to the above first to fourth embodiments will be described in detail.

### [Elastic Sheet]

As the elastic sheet, a common elastic sheet can be used, and a sheet formed of a rubber or a thermoplastic elastomer having elasticity capable of flexibly deforming with respect to deformation of the battery cells 20a, 20b, and 20c can be used. Note that, since an elastic sheet made of a common material generally has a certain heat insulation function, as shown in the first and second embodiments, even in the case where a heat insulation material is not stacked on the elastic sheet, an effect of suppressing heat transfer between battery cells can be obtained.

The rubber may be either a synthetic rubber or a natural rubber, and examples of the synthetic rubber include a styrene butadiene rubber, a butadiene rubber, a chloroprene rubber, an isoprene rubber, a butyl rubber, an ethylene propylene rubber, a nitrile rubber, a silicone rubber, a fluoro rubber, an acrylic rubber, a urethane rubber, a polysulfide rubber, an epichlorohydrin rubber, and a silicone foam.

Examples of the thermoplastic elastomer include polystyrene-based, polyolefin-based, vinyl chloride-based, polyurethane-based, polyester-based, polyamide-based, and polybutadiene-based thermoplastic elastomers. The elastomer may be either porous or nonporous. Note that, in the case of being porous, the cell structure may be either a closed-cell type or an open-cell type.

### (Size of Elastic Sheet)

The thickness of the elastic sheet 11 is not particularly limited, and is preferably 1 mm or more and 10 mm or less in order to effectively obtain the effect of the elastic sheet 11. The size of the main surface 11a of the elastic sheet 11 orthogonal to the thickness direction is preferably substantially the same as the size of surfaces of the battery cells 20a, 20b, and 20c facing the elastic sheet 11, but is not particularly limited. However, when the elastic sheet 11 is remarkably smaller than the battery cell, as described above, the pressure is unevenly applied to the battery cell, which may shorten the lifetime of the battery cell. Therefore, the size of the main surface 11a of the elastic sheet 11 is preferably larger than the surface of the battery cell facing the elastic sheet 11 to the extent that the effect of the present invention is not impaired.

### [Swelling Suppression Sheet]

As a material constituting the swelling suppression sheet, at least one kind of resin selected from a polyethylene, a polypropylene, a polystyrene, vinyl chloride, nylon, acrylic, an epoxy resin, a polyurethane, a polyether ether ketone, a polyetherimide, a polyethylene terephthalate, a polyphenyl sulfide, a polycarbonate, and an aramid can be selected.

Note that, as shown in Figs. 3 to 5, shrink packaging is preferably used in the case of covering the entire surface of the elastic sheet 11, or the elastic sheet 11 and the heat insulation material 15 with the swelling suppression sheet. Therefore, it is more preferable to use a swelling suppression sheet made of a material suitable for shrink packaging. Examples of such a material include a polyethylene, a polypropylene, a polystyrene, a polyethylene terephthalate, and vinyl chloride.

### (Properties of Swelling Suppression Sheet)

In the present embodiment, the swelling suppression sheet preferably has an appropriate tensile strength since the swelling suppression sheet is in close contact with the end surface 11b of the elastic sheet 11 and has an effect of suppressing the swelling at the end surface 11b. Further, the swelling suppression sheet preferably has an appropriate tensile elongation in order to sufficiently obtain the effect of suppressing the swelling along the end surface 11b of the elastic sheet 11.

### (Tensile Strength of Swelling Suppression Sheet)

When the tensile strength of the swelling suppression sheet is less than 20 MPa, the end surface 11b of the elastic sheet 11 is immediately broken in the case of swelling outward, and thus the effect of suppressing the swelling cannot be sufficiently obtained. Therefore, the tensile strength of the swelling suppression sheet is 20 MPa or more, preferably 30 MPa or more, and more preferably 40 MPa or more.

On the other hand, when the tensile strength of the swelling suppression sheet is 150 MPa or less, the effect of suppressing the swelling of the end surface 11b can be appropriately controlled, and an effect of absorbing the deformation of the battery cells 20a, 20b, and 20c by the elastic sheet 11 can be sufficiently obtained. Therefore, the tensile strength of the swelling suppression sheet is preferably 150 MPa or less, more preferably 130 MPa or less, and still more preferably 100 MPa or less.

### (Thickness of Swelling Suppression Sheet)

When a thickness of the swelling suppression sheet is more than 1 mm, it is difficult to follow the shape of the elastic sheet 11, and cracks or breaks may occur. Therefore, the thickness of the swelling suppression sheet is preferably 1 mm or less, more preferably 0.1 mm or less, and still more preferably 0.05 mm or less.

On the other hand, the thickness of the swelling suppression sheet is not particularly limited in lower limit, and is preferably 0.005 mm or more, and more preferably 0.01 mm or more in order to obtain a desired tensile strength.

### <Other Materials Contained in Swelling Suppression Sheet>

Since the swelling suppression sheet is in contact with the battery cells 20a, 20b, and 20c, the swelling suppression sheet preferably has flame retardancy, and specifically preferably contains an inorganic substance or a flame retardant. As a material constituting the swelling suppression sheet, examples of the inorganic substance include talc, calcium carbonate, aluminum hydroxide, titanium oxide, vermiculite, zeolite, synthetic silica, zirconia, zircon, barium titanate, zinc oxide, and alumina, and examples of the flame retardant include a bromine-based flame retardant, a chlorine-based flame retardant, a phosphorus-based flame retardant, a boron-based flame retardant, a silicone-based flame retardant, and a nitrogen-containing compound.

### [Heat Insulation Material]

The heat insulation material used in the heat transfer suppression sheet according to the present embodiment is not particularly limited as long as it has a heat insulation effect. A thermal conductivity can be mentioned as an indicator indicating the heat insulation effect. In the present embodiment, the thermal conductivity of the heat insulation material is preferably less than 1 (W/m·K), more preferably less than 0.5 (W/m·K), and still more preferably less than 0.2 (W/m·K). Further, the thermal conductivity of the heat insulation material is even more preferably less than 0.1 (W/m·K), even still more preferably less than 0.05 (W/m·K), and particularly preferably less than 0.02 (W/m·K).

Note that, the thermal conductivity of the heat insulation material can be measured in accordance with "Testing method for thermal conductivity of refractories" described in JIS R 2251.

### (Size of Heat Insulation Material)

In the case of stacking the heat insulation material on the elastic sheet, it is preferable that the elastic sheet and the heat insulation material have substantially the same size in a plane orthogonal to the thickness. However, in the case where the elastic sheet is remarkably smaller than the heat insulation material, the pressure may be unevenly applied to the battery cell, which may shorten the lifetime of the battery cell. Therefore, the size of main surface 15a of the heat insulation material 15 is preferably larger than the size of the main surface 11a of elastic sheet 11 to the extent that the effect of the present invention is not impaired.

As such a heat insulation material, for example, a material containing at least one kind selected from an inorganic fiber, an organic fiber, an inorganic particle, and an organic particle can be used. Specific examples thereof are shown below.

### <Inorganic Fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, and natural mineral-based fibers such as rock wool, a basalt fiber, wollastonite, and a mullite fiber.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross section fiber having a hollow cross section, a flat cross section, or a polygonal cross section can be preferably used since the heat insulation property is slightly improved.

### (Average Fiber Length of Inorganic Fiber)

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and the mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, and thus the heat insulation property may decrease.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm,and the upper limit is more preferably 10 µm. When the average fiber diameter of the inorganic fiber is less than 1 µm, the mechanical strength of the inorganic fiber may decrease. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat transfer suppression sheet may deteriorate.

### (Content of Inorganic Fiber)

In the present embodiment, in the case where the heat insulation material contains an inorganic fiber, a content of the inorganic fiber is preferably 3 mass% or more and 15 mass% or less with respect to a total mass of the heat insulation material.

In addition, the content of the inorganic fiber is preferably 5 mass% or more and 10 mass% or less with respect to the total mass of the heat insulation material. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber and the inorganic fiber are entangled with each other to form a three-dimensional network, so that an effect of retaining the inorganic particle and other blending materials to be described later can be further improved.

### <Organic Fiber>

The organic fiber has an effect of imparting flexibility to the heat insulation material, and has an effect of increasing a strength of the heat insulation material by the organic fiber forming a framework. In addition, when the inorganic particle and other organic fibers are fused to the surface of the organic fiber, the effect of increasing the strength of the sheet and the effect of retaining the shape of the sheet can be further improved. In addition, when the heat insulation material contains the organic fiber in an appropriate content, a plurality of void portions are formed inside the heat insulation material, and when the heat insulation material is heated, air and moisture can be released to the outside through the void portions.

A single-component organic fiber such as a cellulose fiber may be used as a material for the organic fiber in the heat insulation material, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In this case, the core portion is composed of a first organic material, the sheath portion is composed of a second organic material, and a melting point of the first organic material is higher than a melting point of the second organic material.

### (First Organic Material)

In the present embodiment, in the case of using the binder fiber having a core-sheath structure, the first organic material constituting the core portion is not particularly limited as long as it has a melting point higher than that of the sheath portion, that is, the second organic material, present on the outer peripheral surface of the core portion. Examples of the first organic material include at least one kind selected from a polyethylene terephthalate, a polypropylene, and nylon.

### (Second Organic Material)

The second organic material is not particularly limited as long as it has a melting point lower than the first organic material constituting the organic fiber. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### (Content of Organic Fiber)

When a content of the organic fiber in the heat insulation material is appropriately controlled, a sufficient framework reinforcement effect can be obtained.

The content of the organic fiber is preferably 5 mass% or more, and more preferably 10 mass% or more, with respect to the total mass of the heat insulation material. When the content of the organic fiber is too large, a content of the inorganic particle decreases relatively. Therefore, in order to obtain a desired heat insulation performance, the content of the organic fiber is preferably 25 mass% or less, and more preferably 20 mass% or less, with respect to the total mass of the heat insulation material.

### (Fiber Length of Organic Fiber)

A fiber length of the organic fiber is not particularly limited, and from the viewpoint of ensuring moldability and processability, an average fiber length of the organic fiber is preferably 10 mm or less.

On the other hand, from the viewpoint of making the organic fiber function as a framework and ensuring a compressive strength of the heat transfer suppression sheet, the average fiber length of the organic fiber is preferably 0.5 mm or more.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with the small-diameter inorganic particle as a first inorganic particle and the large-diameter inorganic particle as a second inorganic particle.

### <First Inorganic Particle>

### (Oxide Particle)

The oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, void portions are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even in the case where the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine void portions between particles due to a repulsive force caused by static electricity, and the bulk density thereof is low, so that the particle is used for filling so as to provide a cushioning property.

Note that, in the case of using the nanoparticle as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. **In** addition, since a generally available silica nanoparticle has a bulk density of about 0.1 (g/cm³), for example, even in the case where battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 90°C or lower, the dry silica in which particles can be dispersed can provide a more excellent heat insulation performance than the wet silica.

Note that, the heat transfer suppression sheet according to the present embodiment is preferably produced by a production method in which a mixture containing materials is processed into a sheet by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even in the case of applying a compressive stress, void portions remaining between the nanoparticles and contact points between many particles can suppress the conductive heat transfer, and the heat insulation property of the heat transfer suppression sheet can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, as described above, the heat transfer suppression sheet 10 is preferably interposed between, for example, battery cells, but in a battery cell that has experienced thermal runaway, the temperature rapidly rises to over 200°C and continues to rise to about 700°C. Therefore, it is preferable that the inorganic particle contained in the heat insulation material is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

**In** the case of using the inorganic hydrate particle as the first inorganic particle, when the average particle diameter thereof is too large, it takes a certain amount of time for the first inorganic particle (inorganic hydrate) near the center of the heat insulation material to reach the thermal decomposition temperature thereof, so that the first inorganic particle near the center of the heat insulation material may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat insulation material used in the present invention may contain an inorganic balloon as the first inorganic particle.

When an inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a barite balloon, and a glass balloon can be used.

### (Content of inorganic balloon: 60 mass% or less with respect to total mass of heat insulation material)

A content of the inorganic balloon is preferably 60 mass% or less with respect to the total mass of the heat insulation material.

### (Average particle diameter of inorganic balloon: 1 µm or more and 100 µm or less)

An average particle diameter of the inorganic balloon is preferably 1 µm or more and 100 µm or less.

### <Second Inorganic Particle>

In the case where the heat transfer suppression sheet 10 contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even in the case where a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, in the case of using the nanoparticle as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

In the case where at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 90°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 90°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat transfer suppression sheet, when the average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particles in the heat insulation material is appropriately controlled, a sufficient heat insulation property can be ensured in the heat insulation material.

The total content of the inorganic particles is preferably 60 mass% or more, and more preferably 70 mass% or more, with respect to the total mass of the heat insulation material. When the total content of the inorganic particles is too large, the content of the organic fiber decreases relatively. Therefore, in order to obtain a sufficient framework reinforcement effect and inorganic particle retention effect, the total content of the inorganic particles is preferably 95 mass% or less, and more preferably 90 mass% or less, with respect to the total mass of the heat insulation material.

Note that, the content of the inorganic particle in the heat insulation material can be calculated, for example, by heating the heat insulation material at 800°C, decomposing organic components, and then measuring the mass of the remaining portion.

### <Other Blending Materials>

### <Hot Melt Powder>

In the heat transfer suppression sheet, in addition to the binder fiber and the inorganic particle, the mixture may contain a hot melt powder. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle, hardens. Therefore, falling off of the inorganic particle from the heat insulation material can be further suppressed.

Examples of the hot melt powder include those having various melting points, and it is sufficient to select a hot melt powder having an appropriate melting point in consideration of the melting points of the core portion and the sheath portion of the binder fiber used. In the case of using the binder fiber having a core-sheath structure as the organic fiber, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) and the surrounding molten sheath portion, and the hot melt powder present in gaps in the inorganic particle firstly harden. As a result, the position of the organic fiber can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the materials of the heat insulation material in order to suppress the falling off of the inorganic particle, a powder falling suppression effect can be obtained even when a content thereof is very small. Therefore, the content of the hot melt powder is preferably 0.5 mass% or more, and more preferably 1 mass% or more, with respect to a total mass of the materials of the heat insulation material.

On the other hand, when the content of the hot melt powder is increased, the content of the inorganic particle or the like decreases relatively. Therefore, in order to obtain a desired heat insulation performance, the content of the hot melt powder is preferably 5 mass% or less, and more preferably 4 mass% or less, with respect to the total mass of the materials of the heat insulation material.

In the case where the hot melt powder is contained as the material for the heat insulation material, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle can be prevented.

Note that, the heat insulation material can further contain other binders, colorants, and the like, if necessary. All of these are useful for reinforcing the heat insulation material and improving the moldability, and the total amount thereof is preferably 10 mass% or less with respect to the total mass of the heat insulation material.

Next, a method for producing the heat transfer suppression sheet according to the present embodiment will be described.

### [2. Method for Producing Heat Transfer Suppression Sheet]

The heat transfer suppression sheet 10 according to the first embodiment can be produced, for example, by the following method.

First, the elastic sheet 11 and the swelling suppression sheet 12 having a desired size are prepared, and the swelling suppression sheet 12 is disposed to be wound around the end surface 11b of the elastic sheet 11. Next, the swelling suppression sheets 12 are bonded to each other, to thereby obtain the heat transfer suppression sheet 10.

In addition, the heat transfer suppression sheet 10 can also be obtained by using a resin film molded into an annular shape that shrinks by heating as the swelling suppression sheet 12, disposing the film to surround the end surface 11b of the elastic sheet 11, and then heating the film.

Further, the heat transfer suppression sheets 40 and 50 according to the second and third embodiments can be produced, for example, by the following method.

First, the elastic sheet 11 or a stacked body including the elastic sheet 11 and the heat insulation material 15 is placed on a flat resin film, and then the resin film is bent to cover an upper surface of the stacked body with the resin film. Thereafter, the resin film on a lower surface of the stacked body and the resin film on the upper surface are bonded to each other by heating while applying a pressure around the stacked body. Thereafter, the resin film around the stacked body is shrunk by heating to bring the resin film into close contact with an outer surface of the stacked body. Accordingly, it is possible to obtain the heat transfer suppression sheets 40 and 50 in which the outer main surface side is covered with the outer main surface side portion of the swelling suppression sheet and the outer end surface side is covered with the outer end surface side portion of the swelling suppression sheet. A plurality of pores for discharging the contained air to the outside may be formed in any region of the resin film at any timing before the resin film is shrunk.

Note that, the heat transfer suppression sheet 60 according to the fourth embodiment can be produced in the same manner as the method for producing the heat transfer suppression sheets 40 and 50 according to the second and third embodiments. In this case, a fusion portion formed when the resin film on the lower surface and the resin film on the upper surface of the stacked body are heated while applying a pressure can be the thick portion 16 in the heat transfer suppression sheet 60.

### [3. Battery Pack]

A battery pack according to an embodiment of the present invention includes the heat transfer suppression sheet described in the above [1. Heat Transfer Suppression Sheet]. That is, as shown in Fig. 2, the battery pack 100 includes the plurality of battery cells 20a, 20b, and 20c, and for example, the above heat transfer suppression sheet 10, and the battery cells 20a, 20b, and 20c are connected in series or in parallel. The heat transfer suppression sheet 10 is interposed between the battery cell 20a and the battery cell 20b and between the battery cell 20b and the battery cell 20c. In addition, the battery cells 20a, 20b, and 20c and the heat transfer suppression sheet 10 are housed in the battery case 30.

In the battery pack 100 configured in this manner, even in the case where a pressing force is applied toward the main surface 11a of the elastic sheet 11 due to the expansion of the battery cells 20a, 20b, and 20c, the swelling suppression sheet 12 presses the end surface 11b of the elastic sheet 11 inward, and thus it is possible to suppress the end surface 11b of the elastic sheet 11 from swelling outward. As a result, it is possible to suppress the occurrence of a deviation or wobbling between the battery cells 20a, 20b, and 20c and the heat transfer suppression sheet 10, and it is possible to prevent a decrease in performance of the battery pack. In addition, even in the case where the main surfaces 11a of the elastic sheet 11 are pressed with a large pressing force, it is possible to prevent the elastic sheet 11 from being greatly compressed and deformed and the thickness from being excessively reduced, and it is possible to maintain the heat insulation property between the battery cells 20a, 20b, and 20c.

Note that, although not shown, the heat transfer suppression sheet described in the above [1. Heat Transfer Suppression Sheet] can be disposed not only between the plurality of battery cells but also in a narrow region between the battery cell and the battery case, for example. In this manner, even in the case where the heat transfer suppression sheet is disposed between the battery cell and the battery case, application of unnecessary pressure to the battery cell can be suppressed, and the lifetime of the battery cell can be improved.

In addition, for example, as shown in Fig. 4, the heat transfer suppression sheet 50 including the heat insulation material 15 has an more excellent heat insulation property. Therefore, in the case where the battery pack 100 to which the heat transfer suppression sheet 50 is applied is used in an electric vehicle (EV) or the like and is disposed under a passenger's floor, even when the battery cell ignites, the safety of the passenger can be ensured.

In this case, when the heat transfer suppression sheet 50 is disposed between the battery cell and the battery case, it is not necessary to newly prepare a flame retardant material or the like, and a safe battery pack can be formed at a low cost.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2022-212229) filed on December 28, 2022, and the contents thereof are incorporated herein by reference.

### REFERENCE SIGNS LIST

10, 40, 50, 60 heat transfer suppression sheet
11a, 15a, 15c main surface
11b, 15b end surface
11 elastic sheet
12, 13, 14 swelling suppression sheet
13a, 14a outer main surface side portion
13b, 14b outer end surface side portion
15 heat insulation material
16 thick portion
20a, 20b, 20c battery cell
30 battery case
100 battery pack

## Claims

1. A heat transfer suppression sheet comprising:
an elastic sheet having a pair of main surfaces orthogonal to a thickness direction and an end surface substantially parallel to the thickness direction; and
a swelling suppression sheet continuously disposed along at least the end surface,
wherein
the swelling suppression sheet has a tensile strength of 20 MPa or more.

2. The heat transfer suppression sheet according to claim 1, wherein the swelling suppression sheet has a tensile strength of 150 MPa or less.

3. The heat transfer suppression sheet according to claim 1, wherein the swelling suppression sheet contains at least one kind of resin selected from a polyethylene, a polypropylene, a polystyrene, a polyethylene terephthalate, and vinyl chloride.

4. The heat transfer suppression sheet according to claim 1, wherein the swelling suppression sheet includes an outer main surface side portion that covers an outer main surface side orthogonal to the thickness direction of the heat transfer suppression sheet, and an outer end surface side portion that covers an outer end surface side substantially parallel to the thickness direction of the heat transfer suppression sheet, and includes at least the elastic sheet therein.

5. The heat transfer suppression sheet according to claim 4, wherein the swelling suppression sheet includes a linear thick portion extending along a direction substantially parallel to the main surface of the elastic sheet in at least a partial region of the outer end surface side portion.

6. The heat transfer suppression sheet according to claim 5, wherein at least a part of the thick portion is curved or meandered.

7. The heat transfer suppression sheet according to claim 1, further comprising:
a heat insulation material stacked on at least one of the pair of main surfaces of the elastic sheet.

8. The heat transfer suppression sheet according to claim 7, wherein the heat insulation material has a thermal conductivity of less than 1 (W/m·K).

9. The heat transfer suppression sheet according to claim 7, wherein the heat insulation material contains at least one kind selected from an inorganic fiber, an organic fiber, an inorganic particle, and an organic particle.

10. A battery pack comprising:
a plurality of battery cells; and
the heat transfer suppression sheet according to any one of claims 1 to 9, wherein
the plurality of battery cells are connected in series or in parallel.
